# EUROPEAN PATENT APPLICATION

(11) **EP 2 000 895 A1**
(43) Date of publication of application: **10.12.2008**
(21) Application number: 08157193.7
(22) Date of filing: 29.05.2008
(51) Int. Cl.: G06F 3/048

(54) **User interface for a printer**

(30) Priority: 05.06.2007 EP 07109625
(71) Applicant: Océ-Technologies B.V., 5914 CA Venlo (NL)
(72) Inventor: Neeleman, Marinus P., 6512 JM Nijmegen (NL); Meijer, Joost, 5921 HC Venlo (NL)
(74) Representative: van de Sande, Jacobus

(57) **Abstract**

A user interface for a printer (10), comprising a display (16), an input system (12) and a control unit (14) adapted to present on the display (16) a plurality of operating screens (36-52) in accordance with navigation instructions input via the input system (12), wherein one complete operating screen is presented at one time and wherein the control unit (14) is adapted to assign to each operating screen a fixed location on a two dimensional manifold (54). and, upon a navigation instruction, to animate a movement of the manifold (54) relative to the display (16), so as to show the selected operating screen on the display.

## Description

The invention relates to a user interface for a reprographic apparatus, comprising a display, an input system, and a control unit adapted to present on the display a plurality of operating screens in accordance with navigation instructions input via the input system, wherein one complete operating screen is presented at one time.

Graphical user interfaces of this type are commonly used in reprographic apparatuses such as laser printers, direct induction printers or other electrographic printers, magnetographic printers, ink jet printers and the like. The term "printer" as used further, shall also encompass digital copiers and multiple purpose devices having print, copy and scan functions. The user interface may also be implemented in a network environment, e.g. on a print server that controls one or more printers in a reproduction center, for example.

An example of such a user interface is described in INTERNATIONAL BUSINESS MACHINES CORPORATION: "Industrial printer console navigation mechanism" RESEARCH DISCLOSURE, MASON PUBLICATIONS, HAMPSHIRE, GB, Vol. 457, no. 211, May 2002 (2002-05), XP007130515 ISSN: 0374-4353.

The main purpose of the display is to present operating screens with menus of different functions and options among which the user may select by means of the input system.

Increasing functionality of the printers has led to an increased complexity of the user interface, with the result that it is no longer possible to present the whole menu on a single operating screen that can be displayed on the screen of the display. For that reason, the information to be shown on the display has been distributed onto a plurality of different operating screens which are organised in a hierarchical tree structure including at least one main operating screen or home operating screen and a plurality of sub-operating screens and possibly sub-sub-operating screens and so on, so that the user has to navigate through the operating screens in order to find the functions or options he wants to select. Typically, a selection made on a specific operating screen will open an operating screen on a lower hierarchy level or will at least provide the option to switch to one of a plurality of operating screens on the lower level, which include options or functions that are available in view of the settings made on the higher level operating screen. Such a hierarchical organisation of operating screens is suitable for experienced users, but with increasing complexity, an occasional or unexperienced user may find it difficult to find his way through the tree structure.

US-A-5 745 109 discloses a user interface for a computer system, especially for audio and video applications running on the computer. In this user interface, several operating screens are considered to be located on internal walls of a cube, and what is seen on the screen is a perspective view of one wall of the cube from inside the cube, wherein portions of the neighbouring walls are also visible. By clicking on one of the neighbouring walls, the user may change the perspective such that this wall is shown in the center of the screen. However, this user interface is usable only for up to 6 different operating screens and is not suitable for reflecting a hierarchical organisation of the operating screens.

EP-A1-1 396985 and US 2006/010395 A1 disclose user interfaces for mobile communication terminals, comprising a display, an input system, and a control unit adapted to present on the display a plurality of operating screens in accordance with navigation instructions input via the input system, wherein one complete operating screen is presented at one time and the control unit is adapted to animate, upon a navigation instruction, a movement of the operating screens relative to the display, so as to show the selected operating screen on the display.

It is an object of the invention to provide a user interface of the type indicated in the opening paragraph, which facilitates navigation through the various operating screens, especially for occasional users who have only little experience with the user interface.

This object is achieved with a user interface as specified in claim 1.

According to the invention, the control unit is adapted to assign to each operating screen a fixed location on a two-dimensional manifold, and, upon a navigation instruction, to animate a movement of the manifold relative to the display, so as to show the selected operating screen on the display.

From the viewpoint of the user, the two-dimensional manifold appears as a map on which each operating screen has its specific place. The animated movement of the manifold, and hence the operating screens, relative to the display creates the impression of a walk through, or rather a flight over, a landscape that is represented by the map. The topology of the operating screens on the manifold reflects the hierarchical organisation in the sense that sub-operating screens of a given operating screen are always found adjacent to that given operating screen, so that the user can directly move from the given operating screen to the sub-operating screens associated therewith.

It has been found that the imagination of a landscape or map makes it much easier for a user to understand and to memorise the overall structure of the user interface and to refind an operating screen that he had visited before.

Although the manifold that includes the plurality of operating screens is only two-dimensional, it may be considered as embedded in a higher-dimensional space, so that more complex topologies can be represented, e.g. topologies including closed loops that are each formed by a group of adjacent operating screens.

More specific optional features of the invention are indicated in the dependent claims.

In order to provide an intuitive understanding of the hierarchical organisation of the operating screens, it may preferable that a specific direction on the display screen, e.g. the top-down direction, corresponds to a move to lower hierarchy levels, whereas a move from left to right or right to left corresponds to operating screen transitions within the same hierarchy level. As an alternative, the arrangement may be such that a home operating screen forming the highest hierarchy level is found in the center of the map, and operating screens of lower levels are found more towards the periphery of the map.

The organizational structure of the operating screens that is reflected in the topology of the manifold may also be expressed as a graph (in the sense of a mathematical structure used to model pairwise relations between objects), where a node of the graph corresponds to an operating screen and equally to a location on the manifold and an edge of the graph indicates that operating screens and locations corresponding with the nodes, linked by the edge, are adjacent to each other.
By not allowing all animated movements from a first location to an adjacent location on the manifold, it is possible to enforce a certain sequence of operating screens. This compares with a path through a graph with some directed edges.

The size of an individual operating screen may be smaller than the total area of the display screen, so that portions of adjacent operating screens may be visible in the margin of the screen. Then, it is attractive to use these visible portions of adjacent operating screens in the margin of the screen for displaying icons or labels that identify the function of the adjacent operating screens, and/or for displaying important messages that are related to the function of the adjacent operating screen.

The input system will preferably comprise navigation buttons or keys that may be used for navigating over the manifold and that are disposed in such locations relative to the display that the direction from the center of the display screen to the key or button indicates the direction in which the display screen will appear to move relative to the manifold. For example, the navigation keys or buttons may be arranged at the four corners of the screen or at the respective centers of the four sides of the screen. When the input system comprises a mouse for controlling a cursor on the screen, or when the screen is a touch-screen forming part of the input system, the navigation buttons will be formed on the screen. As an alternative, navigation keys may be formed by physical keys provided on an operating panel near the edge of the screen. In this case, labels and/or arrows indicating the function of the keys may be displayed on the screen close to the respective keys.

Preferred embodiments of the invention will now be explained in conjunction with the drawings, wherein:
- Fig. 1: is a perspective view of a user interface combined with a symbolic representation of an operating screen structure;
- Fig. 2: is a representation of the operating screen structure shown in Fig. 1 as a manifold embedded in a three-dimensional space;
- Figs. 3A-C: are views of a display screen of the user interface shown in Fig. 1, illustrating an animation sequence;
- Fig. 4: is a plan view of the user interface shown in Fig, 1;
- Fig. 5: shows a display screen of a user interface according to a modified embodiment;
- Fig. 6: illustrates another example of an arrangement of operating screens on a two-dimensional manifold embedded in a three-dimensional space; and
- Fig. 7: is a more detailed plan of a operating screen structure according to another embodiment.

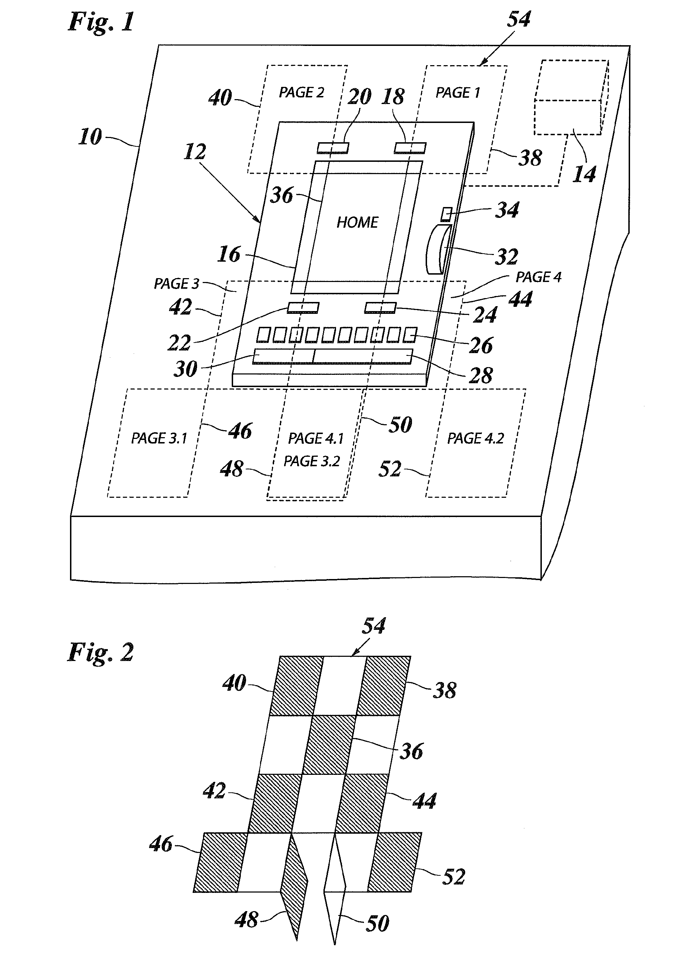

As is shown in Fig. 1, a user interface of a printer 10 comprises an operating panel 12, a control unit 14 and a display 16 formed on the operating panel 12. The operating panel 12 is equipped with a number of input elements and thus forms an input system permitting a user to give instructions to the control unit 14 of the user interface and also to a control unit (not shown) of the printer 10 as a whole. In the example shown, the input elements comprise four navigation keys 18, 20, 22 and 24, ten digit keys 26, a print key 28, a stop key 30, a scroll wheel 32 and a confirmation key 34. As usual, the start key 28 and the stop key 30 serve for starting and stopping or interrupting and resuming a print operation, and the ten digit keys 26 serve for inputting numerical values such as the number of copies to be printed. The scroll wheel 32 is used for selecting menu points on a menu that may be shown on the display 16, and the confirmation key 34 serves for confirming the selection made with the scroll wheel 32.

The navigation keys 18, 20, 22 and 24 permit the user to navigate through a structure of operating screens 36-52 that can selectively be shown on the display 16. The operating screens 36-52 are organised in a hierarchical structure. The top level of the hierarchy is formed by the operating screen 36 which is entitled "HOME", operating screens 38-44 (entitled "PAGE 1" - "PAGE 4") form the next lower level in the hierarchy, and operating screens 46, 48 (PAGE 3.1", "PAGE 3.2") are sub-operating screens to "PAGE 3", whereas the operating screens 50 and 52 ("PAGE 4.1", "PAGE 4.2") are sub-operating screens to "PAGE 4".

As has been shown symbolically in Fig. 1, the operating screens 36-50 have fixed locations on a two-dimensional manifold 54 which, in the representation according to Fig. 1, is formed by the plane of the display 16. This manifold can be regarded as a map of the operating screen structure. A certain complication is caused by the fact that the operating screens 48 and 50 seem to occupy the same location in Fig. 1. However, if the manifold 54 is not considered to be flat, but embedded in a three-dimensional space, so that it may be warped or folded as shown in Fig. 2, a distinct location can be assigned to each operating screen.

In the example shown, the operating screens 36-52 are arranged on the manifold 54 in the form of a chequer board pattern. Thus, in order to move from one operating screen to another, the screen of the display 16 has to be moved relative to the manifold 54 (or vice versa) along a diagonal of the screen. These directions of movement correspond to the positions of the navigation keys 18-24 at the four corners of the screen. Thus, depressing one of the navigation keys, will cause the manifold 54 to slide diagonally through the display screen by a width of one operating screen. For example, if the navigation key 18 is depressed, the manifold 54 will be shifted such that "PAGE 1" moves into the center of the screen, while the operating screen "HOME" retreats to the lower left corner of the screen.

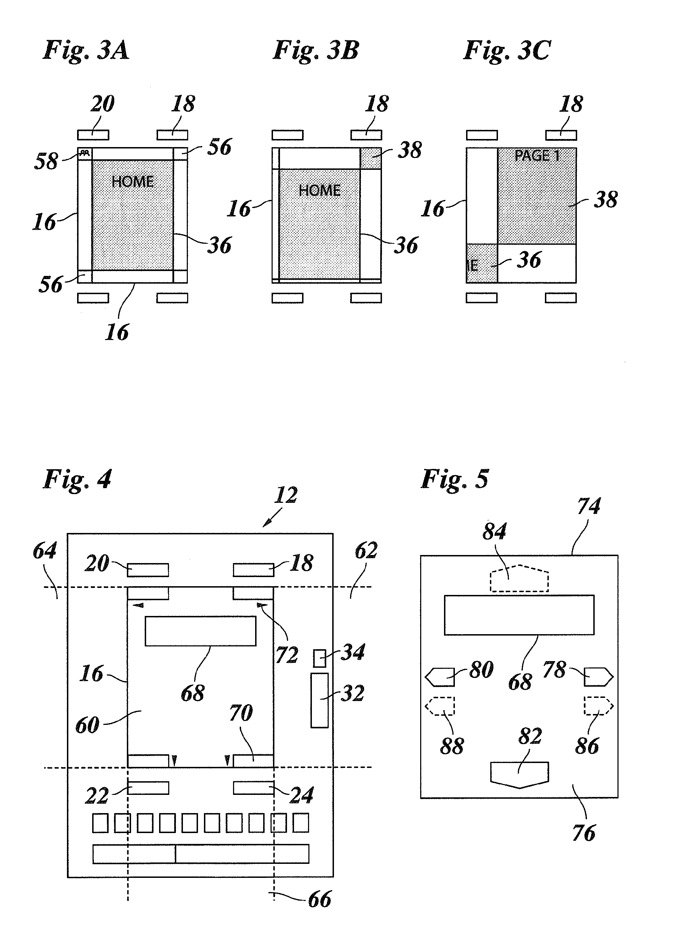

Figs. 3A-C illustrate how such a shift or slide from one operating screen to another can be animated under the control of the control unit 14. The condition shown in Fig. 3A corresponds to the one shown in Fig. 1, where the operating screen "HOME" is shown completely on the display 16 and is centered on the screen thereof. However, the dimensions of the operating screen 36 are slightly smaller than those of the screen, so that corner portions 56 of the adjacent operating screens 38, 40, 42 and 44 are also visible on the screen. These corner portions may conveniently be used for displaying labels or icons 58 that indicate or symbolize the purpose or function of the corresponding operating screen. For example, the icon 58 shown in Fig. 3A would indicate that the operating screen 40 (Fig. 1) contains a list of users (who have sent print jobs to the printer 10). Consequently, if the user at the operating panel 12 wants to see the list of users, i.e. the operating screen 40, he will press the navigation key 20.

In this way, when a user works with the user interface for the first time, the icons in the corner portions 56 will tell him where to find the information he wants to see. If, for example, the user wants to see the contents of operating screen 38 ("PAGE 1) which may contain a list of print jobs waiting in a print queue, he will press the navigation key 18. As a result, the operating screen 38 will move into the screen from the top left corner while the "HOME" operating screen 36 will retreat towards the lower left corner, as is shown in Fig. 3B.

In Fig. 3C, the animation is almost completed, so that, now, operating screen 38 ("PAGE 1") occupies most of the display 16, whereas the "HOME" operating screen 36 has almost shrunk to the corner portion 56. Finally, the operating screen 38 will occupy the position on the screen that had been occupied by the operating screen 36 in Fig. 3A.

The animation described above will give the user the impression that "PAGE 1" was originally located above and right of the HOME operating screen. Next time when the same user comes to the printer 10 and wants to call-PAGE 1, he will remember the location of that operating screen on the imaginary map and will automatically press the corresponding navigation key 18 without having to care for any icons or labels shown on the screen.

All the other operating screens shown in Fig. 1 can be reached in a similar way, with two navigation steps being necessary for going from the HOME operating screen 36 to any of the operating screens 46-52.

It is preferable that each operating screen has a title area or header in the same position on the operating screen, so that, whatever operating screen is shown on the disply 16, the header will always be found in the same position. As an alternative, the header may be shown in a fixed window on the screen, whereas the body of the operating screen is shown in a separate window and only this body window is animated when one of the navigation keys is depressed.

While it has been assumed in the above description that the operating screens are just shifted through the screen of the display 16 without any scaling or distortion, it is possible that the movement of a operating screen into and out of the center of the screen is accompanied by an appropriate scaling or distortion. For example, the operating screen 36, instead of moving out of the screen area as in Figs. 3A-C, may simply shrink to the size of the lower left corner portion 56, i.e. the animation may simulate a lense function which enlarges the center portion of the screen.

Fig. 4 shows a plan view of the operating panel 12, but this time with a modified structure of operating screens 60-66. In this embodiment, the operating screens are abutting each other with their edges like tiles, and the operating screens 60, 62 and 64 are arranged in a horizontal line, whereas the operating screens 60 and 66 are arranged in a vertical row. The operating screen 60 which is shown on the screen of the display 16 in Fig. 4 occupies the whole area of the screen and has a title area 68. Labels 70 are shown in the four corners in the operating screen 60, next to the respective navigation keys 18-24. The labels 70 indicate the purpose or function of the adjacent operating screens 62-66 that can be reached by depressing one of the navigation keys, and arrow heads 72 indicate the direction in which the display 16 appears to move relative to the operating screens when the corresponding navigation key is depressed. Thus, for example, depression of the key 18 will initiate an animation in which the display 16 appears to slide to the right or, equivalently, the operating screens 60 and 62 appear to slide to the left, so that the operating screen 62 will enter into the screen area until it occupies the whole screen, When the new operating screen, e.g. 62, is shown on the screen, the labels 70 and possibly the arrow heads 72 will change so as to indicate the navigation options that are then available.

In the example shown in Fig. 4, the screen 16 can only be moved to the right or to the left or downwards, and the navigation keys 22 and 24 have the same function, i.e. a downward movement of the screen to show the operating screen 66.

Fig. 5 shows a display 74 of a user interface according to a modified example. In this example, the display 74 is formed by a touch screen and shows an operating screen 76 that occupies the entire screen area. The operating screen structure may be equivalent to that shown in Fig. 4. The navigation keys of the previous embodiment are replaced by navigation buttons 78, 80 and 82. These buttons may bear labels (not shown) that indicate the purpose or function of the adjacent operating screen. If an adjacent operating screen is present above the operating screen 76, the operating screen 76 will include an additional navigation button 84 for animating a move to the upper operating screen.

It is also possible that the operating screen 76 shown on the screen is a central operating screen in a horizontal row of five operating screens. Then, while the immediate left and right neighbours of the operating screen 76 can be reached via the buttons 78 and 80, additional navigation buttons 86, 88 may be provided for moving directly to the rightmost and leftmost operating screen, respectively, skipping the immediate neighbours of the operating screen 76. In order to retain the impression of a "flight" over the map, the animation will be such that, first, the immediate neighbour of the operating screen 76 will move through the screen and will then gradually be replaced by the outmost operating screen. Of course, it is also possible to move to the outmost operating screen by pressing the button 78 or 80 twice. Thus, the optional buttons 86, 88 will only have the function of a shortcut.

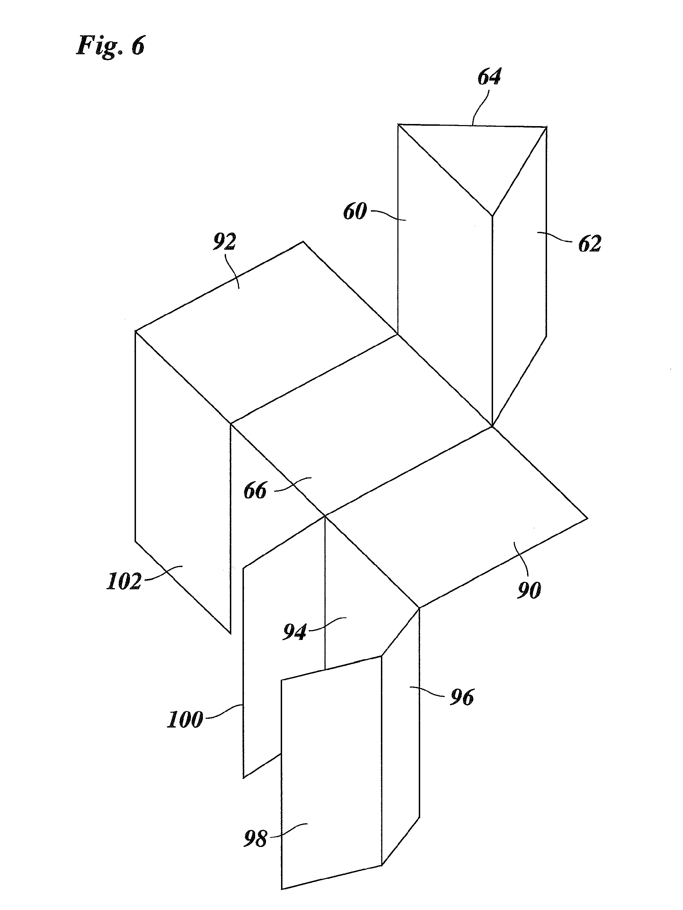

Fig. 6 shows the operating screens 60-66 of Fig. 4 as well as additional operating screens 90-102 on a (folded) two-dimensional manifold. In this operating screen structure, the operating screen 60 may be a HOME operating screen forming the top level of the hierarchy, and the operating screens 62-66 will be sub-operating screens to operating screen 60, forming the next lower level in the hierarchy. The operating screens 90 and 92 will be sub-operating screens of operating screen 66, operating screen 94 will be a sub-operating screen to operating screen 90, operating screens 96-100 will be sub-operating screens to operating screen 94, and operating screen 102 will be a sub-operating screen to operating screen 92.

In the example shown, it may be assumed that users frequently want to switch directly from operating screen 62 to 64 or vice versa without having to return to the HOME operating screen 60. This is why the operating screens 60, 62 and 64 form a closed loop in the manifold, so that a direct transition between operating screens 62 and 64 is possible as a shortcut. In the animation, the operating screens 60, 62 and 64 (and also 66) will appear as if they were coplanar to the plane of the display.

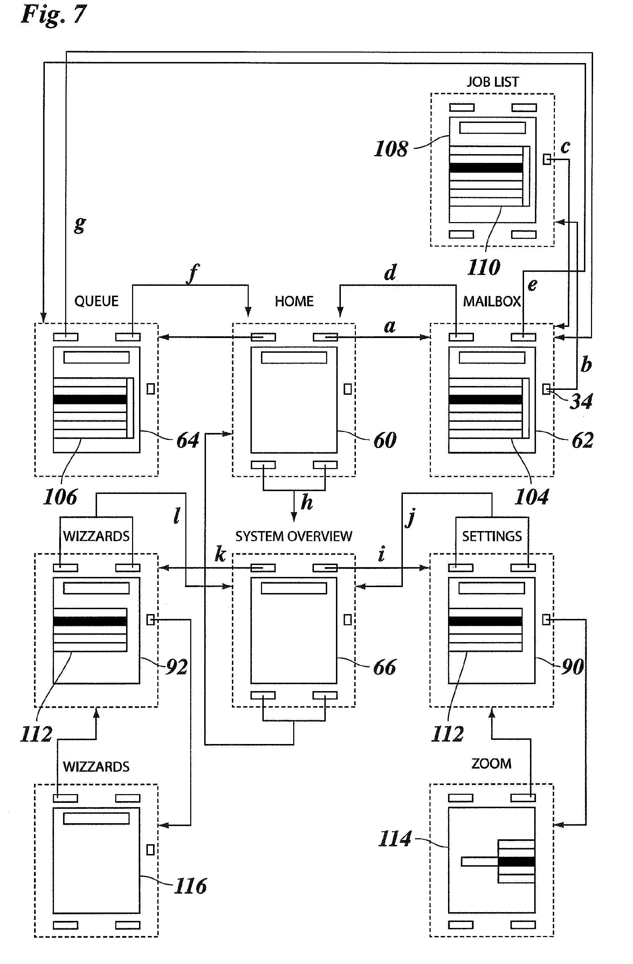

Fig. 7 shows a more detailed example of a user interface employing the operating panel 12 shown in Fig. 1 and a manifold formed only by the operating screens 60-66, 90 and 92 in Fig. 6. Each of these operating screens has been shown together with the essential elements of the operating panel 12, and the navigation scheme has been indicated by arrows leading from the respective input elements to the operating screens that are reached thereby.

It shall be assumed that the printer 10 is connected to a number of user workstations through a network (not shown), so that the users are capable to send their print jobs to the printer. In accordance with user specifications sent together with the print jobs, the jobs received at the printer 10 will be added to a print queue so as to be printed as soon as the printer has completed the earlier jobs waiting in the queue, and/or the jobs may be stored in a mailbox. Thus, a user who has stored at least one job in a mailbox may go to the printer 10 and may call-up the job from the mailbox via the user interface, may change the print options and settings, if desired, and may then print the job, possibly with priority over the jobs sent from remote workstations for direct printing, so that he may wait for the printed copies and take them with him. When sending a job to the printer, the user may also choose to print only a proof and to store the job in the mailbox. Then, when the user has gone to the printer 10 and has inspected the proof, he may change the settings on the operating panel 12 and may then instruct the printer to print the desired number of copies.

When the user interface has not been operated for a predetermined time interval, the control unit 14 will automatically switch the user interface to the HOME operating screen 60, so that a user approaching the printer will normally find the HOME operating screen 60 shown on the display 16.

The operating screen 62 is associated with the mailbox and shows a list 104 of users and/or projects for which at least one print job is stored in the mailbox. The operating screen 64 is associated with the print queue and shows a list 106 of print jobs that are presently waiting in the queue. The operating screen 66 is associated with the system control of the printer and provides access to the system for changing the system configuration, print settings and the like.

When a user comes to the printer, he will normally find the HOME operating screen 60 on the display. If he wants to retrieve a job that he has previously sent to the mailbox, he depresses the navigation key 18 (Fig. 1 or 4) to start an animation which moves the MAILBOX operating screen 62 into the display area (arrow a in Fig. 7). Then, by means of the scroll wheel 32 (Fig. 1), he may select his own user name in the list 104. This user name will then the highlighted. By depressing the confirmation key 34, he opens a menu 108 (JOB LIST) showing a list 110 of all the jobs this user has stored in the mailbox (arrow b in Fig. 7). By means of the scroll wheel 32, he then selects the job he wants to be printed and confirms the selection by pressing the confirmation key 34. This brings him back to operating screen 62 (arrow c).

It is noted that the menu 108 shown in Fig. 7 could also be configured as an operating screen that has a specific location on the manifold. This operating screen would then be a sub-operating screen to operating screen 62. In the example shown, however, the menu 108 is not treated as part of the operating screen structure but may be thought of as just another layer of the operating screen 62. Thus, the transitions between the lists 104 and 110 will not be animated.

Back on operating screen 62, the user may choose to return to the HOME operating screen 60 by depressing the navigation key 20 (arrow d) or to move directly to the QUEUE operating screen 64 by depressing the key 18 (arrow e), if he wants to monitor the progress of his job in the print queue. The selected job will then automatically be highlighted in the list 106.

As an alternative, when the display shows the menu 108 (JOB LIST), and the user presses the confirmation key 34, the display may continue to show the menu 108 and may just add the labels 70 and/or arrows 72 (Fig. 4) showing the user that he may move to operating screen 60 or operating screen 64 by means of the navigation keys.

When the display 16 shows the QUEUE operating screen 64, the user may return to the HOME operating screen 60 with the key 18 (arrow f) or may move to the operating screen 62 by means of the key 20 (arrow g).

When the user has selected a print job in the list 110 or 106 and has returned to the HOME operating screen 60, he may move to the operating screen 66 by pressing one of the keys 22, 24 (arrow h). The operating screen 66 will then show an overview of the current settings for the selected print job, e.g. the density, magnification or reduction factor, selected paper roll or tray, duplex/simplex and the like. A label 70 or icon close to the key 18 will tell the user that he may move to operating screen 90 which shows a list of printing parameters for which the settings may be changed (arrow i). By rotating the scroll wheel 32, the user selects a printing parameter in the list 112 and confirms the selection with the confirmation key 34, which opens a dialogue 114 for changing the settings of the selected parameter. In the example shown, the dialogue 114 is not formed by an operating screen that has a fixed location in the manifold, but is treated as just another layer of an operating screen 90. Depression of the confirmation key 34 or, in the example shown, the navigation key 18, brings the user back to the operating screen 90. On operating screen 90, labels 70 or arrow heads 72 (Fig. 4) indicate that both keys 18, 20 will bring the user back to the operating screen 66 (arrow j). Since the transition from operating screen 90 to operating screen 66 corresponds to an animated slide of the display screen relative to the manifold from right to left, the arrow heads 72 associated with the keys 18, 20 will in this case both point to the left side.

On operating screen 66, a label 70 associated with the key 20 tells the user that he may move to operating screen 92 by depressing the key 20 (arrow k). Operating screen 92 contains a list of wizzards or assistants which help the user to fulfil some more complex operations, by guiding the user through a sequence of dialogues 116. More specificly, when the user has selected a wizzard for a desired task from the list 112 and presses the confirmation key 34, the display shows a first one of the dialogues 116 prompting the user to select between a number of available options. The key 18 will in this case be labled "NEXT" and will bring the user to the next dialogue in the sequence. When the last dialogue in the sequence is reached, i.e. the task has been completed, the label will change to "COMPLETE", and depressing the key 18 will bring the user back to operating screen 92. Similarly, the key 20 will have the label "CANCEL" and will permit the user to abort the task and to return to the operating screen 92 directly. If desired, the transitions between the dialogues 116 may be animated as a movement from left to right. In such a case it is desirable that not all movements of the manifold are allowed. In general it is possible to not allow all movements of the manofold. This leads to a variant where at a certain moment, obligatory, certain operating screens will be presented one after another.

Similarly as for operating screen 90, any of the keys 18, 20 will bring the user back from operating screen 92 to operating screen 66 (arrow I), and from operating screen 66, any of the keys 22, 24, which will then be labled as "HOME", will bring the user back to the HOME operating screen 60. Similarly, when the display shows any of the operating screens 90, 92 or any of the lists 114 or any of the dialogues 116, the keys 20 and 22 may cause the screen to return to the HOME operating screen 60 either by an animated move or by direct switching.

In a variant of the embodiments shown one operating screen of the manifold is transparant, so that an underlying operating screen will become visible in the display area. Preferably this is used for the HOME operating screen. The user will percieve this by the animation where now the HOME operating screen will not shift out or shift in, but will be gradually covered or uncovered.

Animation of the movement of the manifold may be implemented in several ways. Velocity and acceleration of the movement are parameters that may be changed; sound my be added to the animation.

In a next variant of a user interface according to the invention the kind of animation is dependent of the starting operating screen and the target operating screen of the transition. E.g. going to an operating screen on a lower level in a hierarchical tree the animation comprises another sound than going up in the hierarchy.

In still another variant navigation instructions are generated by the system itself, e.g. due to an activation of a help function by a user. In this case the navigation instructions, generated by the system, will be such that an animation starts for moving to a target operating screen and showing any operating screens in between so as to show the path on the manifold to the target operating screen.

## Claims

1. A user interface for a reprographic apparatus (10), comprising a display (16; 74), an input system (12) and a control unit (14) adapted to present on the display (16; 74) a plurality of operating screens (36-52; 60-66; 76; 90-102) in accordance with navigation instructions input via the input system (12), wherein one complete operating screen is presented at one time, **characterized in that** the control unit (14) is adapted to assign to each operating screen a fixed location on a two-dimensional manifold (54), and, upon a navigation instruction, to animate a movement of the manifold (54) relative to the display (16; 74), so as to show the selected operating screen on the display, the operating screens are organized according to a hierarchical structure and the manifold has a topology reflecting the hierarchical structure, and the manifold (54) is embedded in a higher-dimensional space and includes operating screens (48, 50) that would overlap when mapped without scale reduction onto the plane of the display (16).

2. The user interface according to claim 1, wherein not all movements from a first location to a next location on the manifold are are allowed.

3. The user interface according to any of claims 1-2, wherein an operating screen (36) shown completely on the display has dimensions smaller than the available area of the display (16), and a portion (56) of at least one neighbouring operating screen (38-44) is shown together with the complete operating screen (36).

4. The user interface according to claim 3, wherein the operating screens (36-52) are arranged in a chequer board pattern, and when an operating screen (36) is shown on the display (16), corner portions (56) of neighbouring operating screens (38, 40, 42, 44) are shown in the corners of the display.

5. The user interface according to claim 4, wherein the corner portions (56) of the neighbouring operating screens (38-44) include icons (58) that indicate the function of the neighbouring operating screen.

6. The user interface according to any of claims 1-3, wherein the operating screens (60-66; 90-102) are arranged with abutting edges in horizontal rows and vertical columns.

7. The user interface according to any of the preceding claims, wherein a number of operating screens (60, 62, 64) are arranged with abutting edges on a closed loop of the manifold.

8. The user interface according to any of the preceding claims, wherein the input system comprises navigation keys (18, 20, 22, 24) or navigation buttons (78-86) arranged on the display (74) or near the edge of the display (16) in such positions that a direction from the center of the display to the navigation key or button indicates the direction of relative movement between the display and the manifold (54).

9. The user interface according to claim 8, wherein the input system comprises an operating panel (12) accommodating the display (16) and navigation keys (18-24) positioned near the corners of the display (16).

10. The user interface according to claim 9, wherein each operating screen (60) includes labels (70) and/or arrows (72) that are located near the corners of the display (16) and indicate the target of an animated move that is initiated by depressing the navigation key at the corresponding corner of the display.

11. The user interface according to any of the previous claims wherein one screen on the manifold is a transparant screen in such a way that an underlying screen is visible on the display when the transparant screen is presented.
